# EUROPÄISCHE PATENTSCHRIFT

(11) **EP 3 821 479 B1**
(45) Veröffentlichungstag und Bekanntmachung des Hinweises auf die Patenterteilung: **23.10.2024**
(21) Anmeldenummer: 19749590.6
(22) Anmeldetag: 10.07.2019
(51) Int. Cl.: B21H 8/00, B32B 15/01, H01M 10/613, H01M 10/625, H01M 10/647, H01M 10/6557, H01M 50/20

(54) **DISTANZAUSGLEICHSELEMENT, VERWENDUNG EINER METALLFOLIE ALS DISTANZAUSGLEICHSELEMENT UND ANORDNUNG MIT DISTANZAUSGLEICHSELEMENT**
DISTANCE COMPENSATION ELEMENT, USE OF A METAL FILM AS A DISTANCE COMPENSATION ELEMENT AND ARRANGEMENT HAVING DISTANCE COMPENSATION ELEMENT
ÉLÉMENT DE COMPENSATION DE DISTANCE, UTILISATION D'UNE FEUILLE MÉTALLIQUE COMME ÉLÉMENT DE COMPENSATION DE DISTANCE ET ENSEMBLE POURVU D'UN ÉLÉMENT DE COMPENSATION DE DISTANCE

(30) Priorität: 10.07.2018 DE 102018116683
(43) Veröffentlichungstag der Anmeldung: 19.05.2021
(73) Patentinhaber: Wickeder Westfalenstahl GmbH, 58739 Wickede (Ruhr) (DE); Micrometal GmbH, 79379 Müllheim (DE)
(72) Erfinder: LEHMANN, Bernd, 79400 Kandern (DE); FRANKEN, Carina, 59823 Arnsberg-Oeventrop (DE); LOPEZ, Angel, 75180 Pforzheim (DE)
(74) Vertreter: Cohausz & Florack
(86) Internationale Anmeldenummer: PCT/EP2019/068498
(87) Internationale Veröffentlichungsnummer: WO 2020/011833

(56) Entgegenhaltungen:
- EP-A1- 0 842 766
- DE-A1- 102007 017 340
- DE-B4- 102007 017 340
- JP-A- 2005 119 068
- KR-B1- 101 793 084
- US-A- 5 645 955
- US-A- 6 054 088
- US-A1- 2001 007 728
- US-A1- 2009 235 506
- US-A1- 2016 164 061
- US-A1- 2016 260 946
- US-A1- 2016 281 359
- US-B1- 6 207 293

## Beschreibung

Die Erfindung betrifft ein Distanzausgleichselement, eine Verwendung einer Metallfolie als Distanzausgleichselement und eine Anordnung aus zwei Bauteilen mit einem dazwischen angeordneten Distanzausgleichselement.

Bauteilgruppen, in denen einzelne Bauteile mit variierenden Abmessungen eingebaut sind, benötigen für eine sichere Anordnung ein Distanzausgleichselement, das auch als Gapfiller bezeichnet wird. Das Distanzausgleichselement wird beim Zusammenbau der Bauteilgruppe in einem Gehäuse angeordnet und ist geeignet, weitere Bauteile mit unterschiedlichen, durch die Produktion oder durch thermische Ausdehnung bedingten Abmessungen durch elastische Verformbarkeit zu halten. Durch die Elastizität des Distanzausgleichselements wird das Bauteil sicher in dem Gehäuse eingespannt, so dass während der Benutzung der Bauteilgruppe das Bauteil sicher und fest an seiner vorgegebenen Position gehalten wird.

Ein Beispiel einer solchen Bauteilgruppe ist eine Batterieanordnung in einer Batteriewanne, die mit einem Deckel verschlossen wird. Die Längen und/oder Breiten der einzelnen Batterieeinheiten bzw. Batteriezellen wie Rundzellen, Pouchzellen oder Festkörperzellen, weichen produktionsbedingt im Millimeterbereich voneinander ab. Gleichwohl müssen die Batterieeinheiten so in der Batteriewanne positioniert werden, dass die Abmessungsunterschiede ausgeglichen werden und das Verschließen der Batteriewanne zuverlässig möglich ist. Zudem soll bei verschlossener Batteriewanne trotz während der Benutzung, beispielsweise in einem Fahrzeug, entstehender Vibrationen eine Bewegung der Batterieeinheiten innerhalb der Wanne sicher verhindert, zumindest aber eingeschränkt werden.

Der Begriff "Batterie" wird vorrangig für eine aufladbare Batterie, also einen Akkumulator, aber auch eine nicht aufladbare Batterie verwendet.

Für diese Anwendung ist das Anordnen von Keramikplatten aus der DE 10 2010 001 033 A1 oder von Acrylpolster (der Firma 3M) bekannt. Da die genannten Materialien jedoch eine schlechte Wärmeleitfähigkeit aufweisen, müssen zusätzliche Maßnahmen wie das Anordnen von Wärmeleitfolien getroffen werden.

Distanzausgleichselemente werden auch bei weiteren elektrischen oder elektronischen Bauteilgruppen benötigt. In Smart Devices (Smart Phones, Tablets, Notebooks) wird auf engstem Raum ein Distanzausgleichselement benötigt, ebenso bei jeder Form von eingebauten Displays, insbesondere in Fahrzeugen, Anzeigetafeln oder Schildern. Auch hier ist sowohl ein mechanischer Distanzausgleich als auch eine Wärmeabführung als Schutz vor Überhitzung notwendig. Dazu können auch Anforderungen an die elektrische und/oder magnetische Abschirmung auftreten. Diese können durch die genannten bekannten Distanzausgleichselemente nur unzulänglich erfüllt werden.

Die US 2001/007728 A1, US 2016/260946 A1 und US 2016/164061 offenbaren Batterieanordnungen, wobei zwischen den einzelnen Zellen Elemente für eine verbesserte Wärmeübertragung angebracht sind.

Daher liegt der vorliegenden Erfindung das technische Problem zugrunde, ein Distanzelement sowie eine Anordnung aus zwei Bauteilen und einem Distanzelement zu verbessern.

Das zuvor aufgeführte technische Problem wird erfindungsgemäß nach einer ersten Lehre gelöst durch ein Distanzausgleichselement zur Anordnung zwischen zwei Bauteilen mit einer Metallfolie und mit integral mit der Metallfolie ausgebildeten Federelementen, wobei die Federelemente von der Ebene der Metallfolie vorstehen und wobei die Federelemente ausgebildet sind, mit zumindest einem der Bauteile in Kontakt zu stehen, wobei eine Schlitzanordnung mit einer Mehrzahl von Schlitzen in die Metallfolie eingebracht ist. Die Metallfolie ist zudem durch Strecken verformt.

Die Federelemente stehen zu einer oder beiden Seiten der Metallfolie vor und sind elastisch verformbar. Die vorstehenden Federelemente verlaufen dabei unter einem beliebigen schrägen Winkel oder gar senkrecht zur Ebene der Metallfolie. Durch das Vorstehen der Federelemente bilden diese ein elastisches Höhenprofil aus. Bei einem Einbau in einem Gehäuse stehen die Federelemente mit einem der Bauteile oder mit beiden Bauteilen in Kontakt. Je nachdem, welche Länge oder Dicke die Bauteile aufweisen, können die elastischen Federelemente eine Abmessungstoleranz ausgleichen und gleichzeitig eine sichere und feste Anordnung der Bauteile in dem Gehäuse gewährleisten.

Die zuvor beschriebene Metallfolie weist somit aufgrund der Metalleigenschaften eine gute Elastizität für den Distanzausgleich sowie gleichzeitig eine gute Wärmeleitfähigkeit auf, so dass das beschriebene Distanzausgleichselement nicht nur eine gute mechanische Stabilität, sondern gleichzeitig auch eine gute Wärmeableitung bewirken kann.

Für die Ausbildung der Federelemente der Metallfolie gibt es verschiedene Möglichkeiten, die nachfolgend beschrieben werden.

Bei einer bevorzugten Ausgestaltung des Distanzausgleichselements ist eine Schlitzanordnung mit einer Mehrzahl von Schlitzen in die Metallfolie eingebracht, so dass einzelne Abschnitte gebildet werden, die gezielt zu den vorstehenden Federelementen umgeformt werden können, während die weiteren Bereiche der Metallfolie im Wesentlichen in der ursprünglichen Ebene der Metallfolie verbleiben. Somit wird eine Funktionsgeometrie gebildet, die in einem weiteren Herstellungsschritt verformt wird. Die Schlitze können dabei eine beliebige Form aufweisen und insbesondere ganz oder abschnittsweise gerade, gekrümmt, gebogen und/oder rund bis hin zu spiralförmig ausgebildet sein

Die Schlitzanordnung kann einerseits durch Stanzen preiswert und mit großer Prozessgeschwindigkeit erzeugt werden. Dazu kommen Schneiden, Messer oder Stanzen bei endlosen Metallfolien zur Anwendung. Die Anwendung von mechanischen Werkzeugen erlaubt eine schnelle Bearbeitung der Ausgangsmetallfolie, jedoch können hierbei Risse und scharfe Kanten auftreten, die sich nachteilig auf die weitere Verwendung, insbesondere bei kleinen Dimensionen auswirken können.

Andererseits kann die Schlitzanordnung mittels Ätzen mit größerer Genauigkeit, aber mit größerem Aufwand hergestellt werden. Beim Ätzen wird beispielsweise mittels UV Lithographie das Ätzen vorbereitet, um anschließend das säurehaltige Ätzmittel aufzubringen. Das Ätzen erlaubt eine sehr genaue Einstellung der Geometrie des Kantenbereichs der Schlitze (Fasen, Abrundungen), so dass das Verformen der durch die Schlitze erzeugten Abschnitte der Metallfolie genauer durchgeführt werden kann. Die Herstellung ist daher für kleine Abmessungen des Distanzausgleichelements besonders gut geeignet.

Die zuvor beschriebene Schlitzanordnung kann ein regelmäßiges Muster von Schlitzen aufweisen, so dass sich nach dem Verformen eine regelmäßige Anordnung von Federelementen ergibt. Ebenso ist es vorzugsweise möglich, dass die Schlitzanordnung ein Muster mit variablen Längenwerten und/oder Abstandswerten bildet. Somit kann die Anordnung der Federelemente auf der Metallfolie gezielt angeordnet, gruppiert oder vereinzelt werden.

Die durch die Schlitzanordnung ausgebildeten und für ein Umformen vorgesehenen Abschnitte können durch eine mechanische Krafteinleitung umgeformt werden. Die Krafteinleitung kann in unterschiedlicher Weise erfolgen.

Erfindungsgemäß ist die Metallfolie durch Strecken verformt und bildet ein sogenanntes Streckmetall. Beim Strecken der Metallfolie werden die voneinander durch die Schlitze getrennten Abschnitte auseinander gezogen. Gleichzeitig gibt das Material der Folie den Kräften derart nach, dass sich quer zur Streckrichtung zwischen den Schlitzen angeordnete Abschnitte verdrehen und aus der Ebene heraus verformt werden. Somit werden die Federelemente während des Streckens abschnittsweise ausgebildet. Die Form der Federelemente wird durch die Struktur der Schlitzanordnung bestimmt. Die vorstehenden Abschnitte stehen in einem Winkel vor, werden bei Kontakt mit einem Bauteil umgebogen und bilden somit einen flächigen Kontakt mit dem Bauteil aus.

Des Weiteren ist es möglich, dass die Metallfolie abschnittsweise mit Federelementen versehen ist und abschnittsweis als plane Metallfolie ausgebildet ist. Dadurch kann eine asymmetrische Anordnung der Federelemente einerseits und eines planen Abschnitts ohne Federelemente für eine bessere Wärmeübertragung realisiert werden. Somit kann der Abschnitt der Metallfolie mit den Federelemente für die Positionierung und Sicherung einer Batterie dienen, während der plane Abschnitt der Metallfolie die Wärme an ein weiteres Bauteil wie ein Gehäuse ableiten kann.

Eine zuvor beschriebene Metallfolie weist typischer Weise eine Dicke im Bereich von 0,02 bis 1,0 mm, insbesondere bis zu 2,0 mm auf. Die Höhe der von der Metallfolie vorstehenden Federelemente liegt bevorzugt im Bereich von 0,05 bis 5 mm, insbesondere bis zu 10 mm, wobei die Höhe an die jeweilige Anwendung angepasst werden kann. Die Federelemente können dann Toleranzen beispielsweise in der Größe von bis zu 3 mm, insbesondere bis zu 5 mm überbrücken und gleichzeitig auch bei mechanischer Belastung durch Stöße oder Vibrationen eine sichere Anordnung der Bauteile relativ zueinander gewährleisten.

Die Metallfolie kann einen einlagigen Aufbau aufweisen und besteht insbesondere aus einem der folgenden Metalle: Kupferlegierung, insbesondere eine sogenannte Sol-oder K-Legierung, Kupfer-Beryllium-Legierung, Kupfer-Zink-Legierung, Kupfer-Zirkonium-Legierung, Kupfer-Zinn-Legierung.

Erfindungsgemäß besteht die Metallfolie weiterhin aus mindestens zwei Metallschichten, wobei mindestens eine Metallschicht aus einem ersten Metall besteht, wobei mindestens eine Metallschicht aus einem zweiten Metall besteht, wobei das erste Metall einen gegenüber dem zweiten Metall größeren Elastizitätsmodul aufweist und wobei das zweite Metall eine gegenüber dem ersten Metall größere Wärmeleitfähigkeit aufweist.

In bevorzugter Weise besteht die Metallfolie aus drei Schichten, wobei die beiden äußeren Schichten aus dem ersten Metall und die mittlere Schicht aus dem zweite Metall bestehen. Bi-Metalleffekte werden dadurch vermieden, so dass auch bei unterschiedlichen Betriebstemperaturen die Formstabilität der Metallfolie gewährleistet bleibt. Ebenso ist ein Aufbau aus nur zwei Metallschichten möglich, um gezielt den Bi-Metalleffekt zum Erzeugen von mechanischen Kräften im Zusammenbau der Bauteile zu erzielen.

In bevorzugter Weise ist das erste Metall mit größerem Elastizitätsmodul ausgewählt aus der Gruppe: ferritischer und austenitischer Stahl bzw. Edelstahl, kohlenstoffarmer Umformstahl (DD11/1.0332), nichtrostender Edelstahl (magnetisch), insbesondere X6Cr17/1.4016, nichtrostender Edelstahl (nicht magnetisch), insbesondere X5CrNi18-10/1.4301, Eisen-Nickel-Legierungen, Nickel, insbesondere Ni99,2/2.4066, Nickellegierung und Titan, insbesondere Ti Grade 1/3.7025.

In bevorzugter Weise ist das zweite Metall mit größerer Wärmeleitfähigkeit ausgewählt ist aus der Gruppe: Kupfer, niedriglegierte Kupfer-Legierungen, insbesondere Cu-ETP (E-Cu)/CW004A, Aluminium, insbesondere Al99,5 / EN-AW-1050A, Aluminiumlegierungen mit Anteilen an Magnesium, Zink, Kupfer, Mangan, Blei und/oder Silizium, Bronzelegierungen, insbesondere CuSn4/CW450K, Silber, Gold.

Die genannten ersten Metalle weisen ein Elastizitätsmodul in der Größenordnung von insbesondere 90 - 210 kN/mm² und die zweiten Metalle in der Größenordnung von weniger als 70 - 140 kN/mm² auf.

Die genannten zweiten Metalle weisen eine Wärmeleitfähigkeit in der Größenordnung von größer 100 W/(m*K) und bis zu 400 W/(m*K) und die ersten Metalle in der Größenordnung zwischen 10 und 100 W/(m*K) auf.

Somit ist die Wärmeleitfähigkeit des zweiten Metalls um den Faktor 10-1000 mal größer als bei Verwendung von Kunststoffen, wie es im Stand der Technik üblich ist.

Bei einer besonders bevorzugten Ausgestaltung der Metallfolie bestehen das erste Metall aus einer Aluminiumlegierung und das zweite Metall aus einem Edelstahl.

Die Metallschichten der Metallfolie sind vorzugsweise plattiert und bilden einen festen Verbund.

Die Metallschichten der Metallfolie weisen unterschiedliche Dicken auf, wobei die mindestens eine Metallschicht aus dem ersten Metall mit höherem Elastizitätsmodul bevorzugt dünner als die mindestens eine Schicht aus dem zweiten Metall mit höherer Wärmeleitfähigkeit. Denn die zum Erzeugen einer federnden Eigenschaft des Federelements erforderliche Dicke ist gering, während für eine gute Wärmeableitung die Dicke der Schicht aus dem zweiten Metall möglichst groß sein sollte. Die Dicke der Schicht aus dem ersten Metall beträgt dabei vorzugsweise 5 bis 20 % der Gesamtdicke der Metallfolie, so dass bei einem zweischichtigen Aufbau die Schicht aus dem zweiten Metall vorzugsweise 80 bis 95 % der Gesamtdicke ausmacht. Bei einem dreischichtigen Aufbau weist die Dicke der mittleren Schicht aus dem zweiten Metall insbesondere eine relative Dicke von 60 bis 90 % auf.

Bei den zuvor beschriebenen Ausführungsbeispielen des Distanzausgleichselements sind die Metalle hinsichtlich ihrer Wärmeleitfähigkeit und ihres Elastizitätsmoduls beschrieben worden. Die Metalle sind elektrisch leitfähig und bilden eine Abschirmung gegenüber elektrischen Feldern. Somit weist das Distanzausgleichselement die zusätzliche Eigenschaften der elektrischen Abschirmung auf, die insbesondere bei der Anwendung mit elektronischen Geräten vorteilhaft ist.

Bei einer weiteren Ausgestaltung des Distanzausgleichselements weist die Metallfolie zumindest abschnittsweise, vorzugsweise ganzflächig, und in mindestens einer Schicht ein ferromagnetisches Metall auf. Dadurch kann nicht nur eine Abschirmung gegen elektrische Felder durch die Metallfolie erreicht werden, sondern die Metallfoie bewirkt auch einen zusätzlichen Schutz des Bauteils gegen magnetische Felder und sorgt somit für eine Verbesserung der elektromagnetischen Verträglichkeit (EMV) des Bauteils. Beispiele für ferromagnetische Metalle sind Reineisen, Kohlenstoffstähle, Weißblech, Eisen-Nickel-Legierungen, Kobalt-Eisen-Legierungen, µ-Metall, amorphe Materialien, ferritische Legierungen, nichtrostender Edelstahl, insbesondere X6Cr17 / 1.4016 oder ein höher legierter ferritischer Stahl 1.4568.

Das Distanzausgleichselement wird bevorzugt mit elektronischen oder elektrischen Bauteilen eingesetzt. Diese Bauteile sind in der Regel an sich elektrisch isoliert, jedoch kann es vorteilhaft sein, dass auf mindestens einer Seite der Metallfolie eine elektrisch isolierende Schicht angeordnet ist. Diese Schicht kann als Folie, insbesondere als Kapton-Folie, oder durch einen flüssigen Materialauftrag gebildet sein. Dabei kann die isolierende Schicht vollflächig oder partiell zur elektrischen Isolation aufgebracht sein. Beim Aufbringen der isolierenden Schicht auf die vorstehenden Federelemente ist zu berücksichtigen, dass die Federelemente nach dem Aufbringen der isolierenden Schicht nicht oder nur geringfügig in ihrer Funktion eingeschränkt sind. Durch die isolierende Beschichtung wird eine verbesserte elektrische Isolierung zur Vermeidung von elektrischen Strömen und Kriechströmen sowie eine verbesserte Durchschlagsfestigkeit des Distanzausgleichselements erreicht.

Alternativ dazu kann das Distanzausgleichselement auch zur elektrischen Kontaktierung der Bauteile untereinander, beispielsweise von Batterien mit gleicher Polung, eingesetzt werden. Dazu ist vorgesehen, dass die Kontaktpunkte bzw. Kontaktflächen der Bauteile an der Metallfolie, insbesondere an den vorstehenden Federelementen anliegen. Durch die weiteren schon beschriebenen Eigenschaften des Distanzausgleichselements kann eine sichere Kontaktierung der Bauteile gewährleistet werden.

Zur Verbesserung der Kontaktierung und dadurch zum Vermeiden von hohen Übergangswiderständen bei der Wärmeleitung kann das Distanzausgleichselemente im Bereich der herausgearbeiteten Federelemente durch aufgebrachte Klebeelemente, z.B. beidseitig mit Kleber versehene Wärmeleitfolie, Pasten o.a., durch eine gezielte Oberflächenbearbeitung, beispielsweise durch Strukturieren oder Prägen, oder durch Beschichten verbessert werden. Die aufgeführten zusätzlichen Komponenten können aus metallischen oder nicht- metallischen, organischen oder anorganischen Materialien hergestellt sein.

Das oben aufgezeigte technische Problem wird erfindungsgemäß auch durch die Verwendung einer Metallfolie als Distanzausgleichselement zur Anordnung zwischen zwei Bauteilen gelöst, wobei die Metallfolie nach einem der zuvor erläuterten Beispiele und Varianten ausgebildet ist.

Das technische Problem wird auch durch eine Anordnung aus einem ersten Bauteil, einem Distanzausgleichselement und einem zweiten Bauteil gelöst, wobei die Metallfolie nach einem der zuvor erläuterten Beispiele und Varianten ausgebildet ist, wobei das Distanzausgleichselement zwischen den beiden Bauteilen angeordnet ist und wobei die Federelemente des Distanzausgleichselements Abmessungsvariationen des ersten Bauteils ausgleichen und wobei das Distanzausgleichselement Wärmeenergie von dem ersten Bauteil auf das zweite Bauteil überträgt.

In bevorzugter Weise stehen dann, wenn die Federelemente nur zu einer Seite der Ebene der Metallfolie vorstehen, die Federelemente mit einem der Bauteile und die Metallfolie mit den nicht verformten Abschnitten mit dem anderen Bauteil in Kontakt. Stehen die Federelemente zu beiden Seiten der Metallfolie hervor, dann stehen auf beiden Seiten des Distanzausgleichselements die Federelemente mit den Bauteilen in Kontakt.

Eine weitere bevorzugte Ausgestaltung der beschriebenen Anordnung besteht darin, dass mindestens zwei Distanzausgleichelemente der zuvor beschriebenen Art zwischen dem ersten Bauteil und dem zweiten Bauteil angeordnet sind. Somit addieren sich die federnden und wärmeleitenden Eigenschaften der mindestens zwei Distanzausgleichselemente.

Die allgemein beschriebene Anordnung kann in verschiedenen Anwendungen zum Einsatz kommen. Das erste Bauteil kann eine elektrisches Bauteil, insbesondere eine Batterie, eine Batteriezellenanordnung oder ein Display sein und das zweite Bauteil kann ein mechanisches Bauteil, insbesondere eine Batteriewanne, ein Gehäuse, ein Armaturenbrett eines Fahrzeugs oder eines Flugzeugs, eine Anzeigetafel oder ein Straßenschild sein.

Eine wichtige Anwendung des Distanzausgleichselements ist die Anwendung in einer Batterieanordnung für ein Fahrzeug. Wie einleitend ausgeführt worden ist, weisen die aufladbaren Batterien, vorzugsweise Rundzellen, Herstellungstoleranzen im Bereich von beispielsweise bis zu 3 mm auf. Die Batteriezellen werden nebeneinander in einer Batteriewanne angeordnet, die mit einem Deckel verschlossen wird. In der Batteriewanne wird das Distanzausgleichselement auf dem Boden angeordnet und die Batteriezellen werden - einzeln oder gruppenweise im Verbund - auf das Distanzausgleichselement aufgesetzt. Beim Schließen des Deckels kommen die oberen Enden der Batterien bzw. der Batteriegruppen mit der Deckelinnenseite in Kontakt und werden gegen das Distanzausgleichselement nach unten gedrückt. Da das Distanzausgleichselement die elastisch verformbaren Federelemente aufweist, gibt das Distanzausgleichselement je nach Belastung abschnittsweise so nach, so dass ein Ausgleich der unterschiedlichen Längen der Batterien erreicht wird.

Das Distanzausgleichselement weist somit zunächst eine mechanische Sicherungsfunktion auf, indem die Batterien bzw. Batteriegruppen elastisch federnd innerhalb des Batteriegehäuses bestehend aus Batteriewanne und Deckel gehalten werden. Dadurch werden die Batterien gegen eine Bewegung innerhalb der Batteriegehäuses ausgelöst durch Stöße oder Vibrationen gesichert.

Durch den festen Kontakt mit den Batterien kann das Distanzausgleichselement zusätzlich auch Wärme von den Batterien aufnehmen und durch die Anlage an der Batteriewanne diese Wärme ableiten. Neben der mechanischen Sicherung wird also auch die Funktion der Wärmeabführung durch das Distanzausgleichselement übernommen.

Wie oben beschrieben, kann die Metallfolie des Distanzausgleichselements eine elektrisch isolierende Beschichtung aufweisen, die im eingebauten Zustand an den Batterien bzw. Batteriegruppen anliegt. Dadurch wird vermieden, dass elektrische Energie über das Distanzausgleichselement abgeführt wird.

Alternativ dazu kann die Metallfolie des Distanzausgleichselements auch unbeschichtet sein, so dass die Metallfolie die elektrischen Kontakte der Batterien verbindet und zudem mit einer elektrischen Leitung verbunden ist, um die elektrische Energie weiterzuleiten.

Ein weiterer Einsatzbereich der beschriebenen Anordnung ist die mechanische Sicherung und Wärmeentlastung von elektronischen Geräten wie Smart Phones, Tablets, Notebooks oder anderen Smart Devices. Die Dimensionierung ist gegenüber dem zuvor beschriebenen Beispiel der Fahrzeugbatterie erheblich kleiner, so dass die Federelemente der Metallfolie des Distanzausgleichselements deutlich kleiner dimensioniert sind. Gleichwohl können in solchen elektronischen Geräten die gleichen Funktionalitäten erfüllt werden, wie sie zuvor beschrieben worden sind.

Wie oben beschrieben, kann die Metallfolie auch nur abschnittsweise mit Federelementen versehen und abschnittsweis als plane Metallfolie ausgebildet sein. Dadurch kann eine asymmetrische Anordnung der Federelemente im Bereich der Batterie einerseits und eines planen Abschnitts ohne Federelemente für eine bessere Wärmeübertragung außerhalb des Bereichs der im Gehäuse angeordneten Batterie realisiert werden. Somit kann der Abschnitt der Metallfolie mit den Federelementen für die Positionierung und Sicherung einer Batterie dienen, während der plane Abschnitt der Metallfolie die Wärme an das Gehäuse ableiten kann

Ein weiterer Einsatzbereich der Anordnung ist die Halterung und Sicherung von Bildschirmen, beispielsweise in Fahrzeugen oder Flugzeugen. Da die Fläche der eingesetzten Bildschirme stetig größer wird und zudem auch gebogene Bildschirme Anwendung finden, ist eine Anwendung der beschriebenen Distanzausgleichselemente bei Bildschirmen vorteilhaft. Denn der jeweilige Bildschirm wird in ein Gehäuse eingesetzt, in dem bereits ein Distanzausgleichselement angeordnet ist. Durch Andrücken und Verrasten des Bildschirms mit dem Gehäuse wird der Bildschirm mittels des Distanzausgleichselements sicher in Position gehalten, wobei auch hier Herstellungstoleranzen oder Maßveränderungen durch Erwärmung durch die Federelemente der Metallfolie ausgeglichen werden. Das Abführen von Wärme ist auch bei dieser Anwendung vorteilhaft.

Bevorzugt ist dabei weiterhin, dass die Metallfolie zumindest abschnittsweise aus einem ferromagnetischen Metall besteht. Dadurch kann eine bessere elektromagnetische Verträglichkeit (EMV) des Bildschirms erreicht werden. Diese EMV ist insbesondere bei großen Bildschirmen von Vorteil, da durch die zunehmende elektronische Steuerung und Digitalisierung der Fahrzeuge mehr elektrische Signale im Fahrzeug transportiert werden, die zu einer Störung der Ansteuersignale des Bildschirms führen können. Somit kann das Distanzausgleichselement neben der verbesserten mechanischen Sicherung und des vergrößerten Wärmeausgleichs auch die elektromagnetische Verträglichkeit von Bildschirmen erreichen.

Des Weiteren können die beschriebenen Distanzausgleichselemente auch in Anzeigetafeln und Schildern eingesetzt werden, um dort Bildschirme oder Beleuchtungseinrichtungen oder zumindest deren Stromversorgung durch Batterien zu sichern und deren Wärmemanagement zu verbessern.

Im Folgenden wird die Erfindung anhand von Ausführungsbeispielen mit Bezug auf die Zeichnung erläutert. In der Zeichnung zeigen
- Fig. 1: ein Ausführungsbeispiel eines nicht zur Erfindung gehörenden Distanzausgleichselements,
- Fig. 2: die Metallfolie zur Herstellung des Distanzausgleichselements nach Fig. 1 mit einer eingebrachten Schlitzanordnung,
- Fig. 3: das in Fig. 1 dargestellte Distanzausgleichselement in einer Draufsicht,
- Fig. 4, 4a: das in Fig. 1 dargestellte Distanzausgleichselement in einer Seitenansicht,
- Fig. 5a, b: ein Ausführungsbeispiel eines erfindungsgemäßen Distanzausgleichselements,
- Fig. 6a-f: Ausführungsbeispiele von Metallfolien mit unterschiedlichen Schlitzanordnungen zur Herstellung von Distanzausgleichselementen,
- Fig. 7a, b: einen Ausschnitt aus einer Metallfolie mit einer Schlitzanordnung zur Herstellung eines Distanzausgleichselements,
- Fig. 8a, b: einen Ausschnitt aus einer Metallfolie mit einer Schlitzanordnung zur Herstellung eines Distanzausgleichselements,
- Fig. 9a, b: eine erfindungsgemäße Anordnung mit einem Distanzausgleichselement nach Fig. 8,
- Fig. 10: ein Ausführungsbeispiel eines nicht zur Erfindung gehörenden Distanzausgleichselements,
- Fig. 11: ein Ausführungsbeispiel eines nicht zur Erfindung gehörenden Distanzausgleichselements und
- Fig. 12: eine erfindungsgemäße Anordnung.

In der nachfolgenden Beschreibung der verschiedenen erfindungsgemäßen Ausführungsbeispiele werden gleiche Bauteile mit gleichen Bezugszeichen versehen, auch wenn die Bauteile bei den verschiedenen Ausführungsbeispielen in ihrer Dimension oder Form Unterschiede aufweisen können.

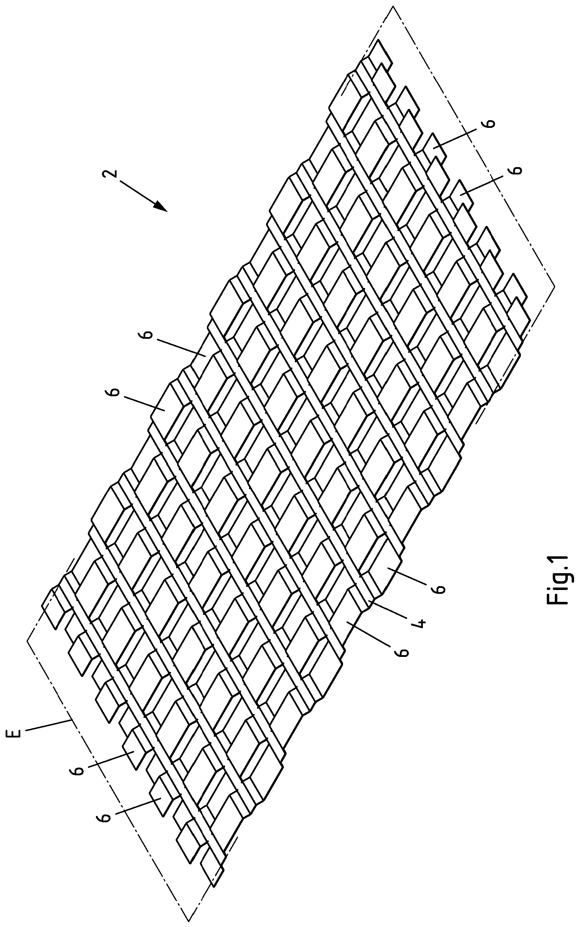

Die Fig. 1 bis 4 zeigen ein erstes Ausführungsbeispiel eines erfindungsgemäßen Distanzausgleichselements 2 zur Anordnung zwischen zwei Bauteilen, wobei die Figuren unterschiedliche Zustände und Ansichten der Metallfolie 4 darstellen.

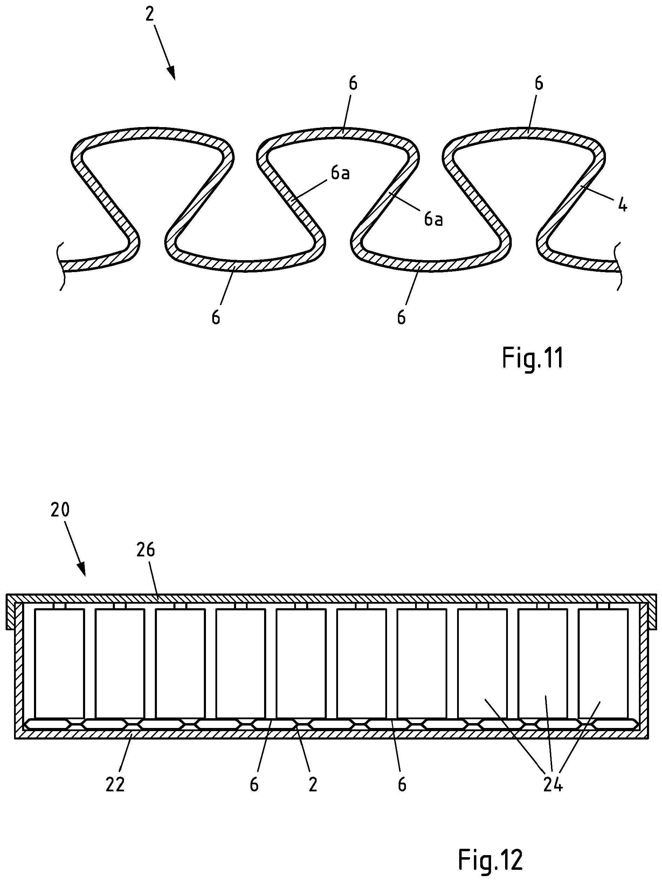

Das fertiggestellte Distanzausgleichselement 2 ist zunächst in Fig. 1 in einer perspektivischen Ansicht dargestellt und besteht aus einer Metallfolie 4 und integral mit der Metallfolie 4 ausgebildeten Federelementen 6. Die Federelemente 6 stehen von der Ebene E der Metallfolie 4 vor und sind ausgebildet, mit zumindest einem der Bauteile in Kontakt zu stehen. Eine solche Anordnung ist in Fig. 12 dargestellt und wird weiter unten näher erläutert.

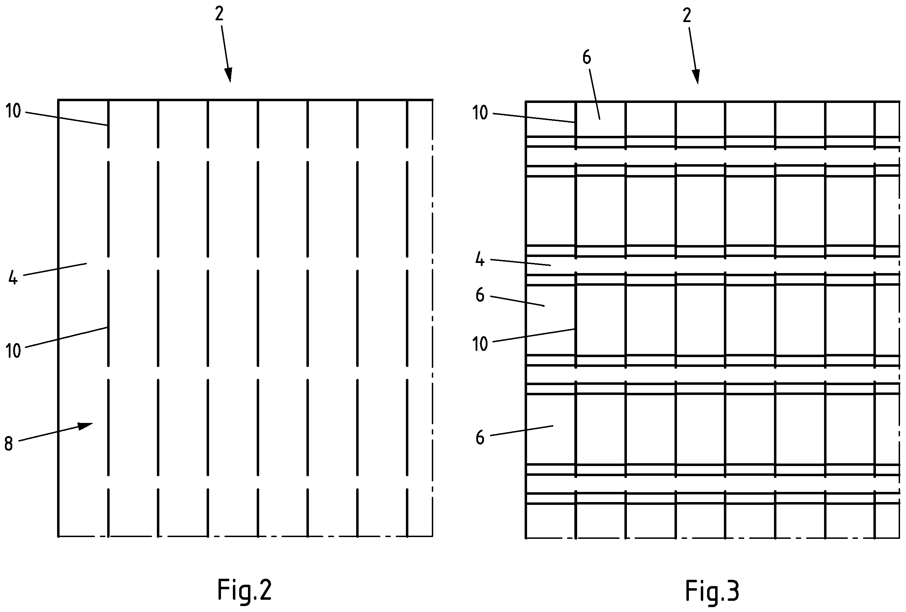

Die noch unbearbeitete Metallfolie 4 wird zunächst mit einer Schlitzanordnung 8 versehen. Fig. 2 zeigt ausschnittsweise die Metallfolie 4 mit der Schlitzanordnung 8 vor deren Weiterverarbeitung. Die Schlitzanordnung 8 besteht aus einer Vielzahl von parallel zueinander eingebrachten Schlitzen 10, die eine Funktionsgeometrie bilden. Die Schlitze 10 werden dabei mit Messern, Schneiden oder Stanzen oder alternativ durch Ätzen in die Metallfolie 4 eingebracht.

Fig. 3 zeigt den gleichen Ausschnitt der Metallfolie nach der Umformung der Metallfolie 4 und Fig. 1 zeigt die perspektivische Darstellung der gesamten Metallfolie 2. Jeweils ein Abschnitt zwischen zwei Schlitzen 10 ist zur einen Seite hin aus der Ebene E der Metallfolie 4 heraus umgeformt, also geprägt worden, während jeweils der benachbarte Abschnitt zwischen den Schlitzen 10 zur anderen Seite hin geprägt worden ist. Somit alternieren die umgeformten Abschnitte zu beiden Seiten der Metallfolie 4 und bilden die Federelemente 6 aus. Die Federelemente 6 weisen dabei jeweils einen flächigen Abschnitt auf, der im eingebauten Zustand mit einem der Bauteile in Kontakt ist. Die Flanken der vorstehenden Federelemente 6 sind dabei tiefgezogen ausgebildet.

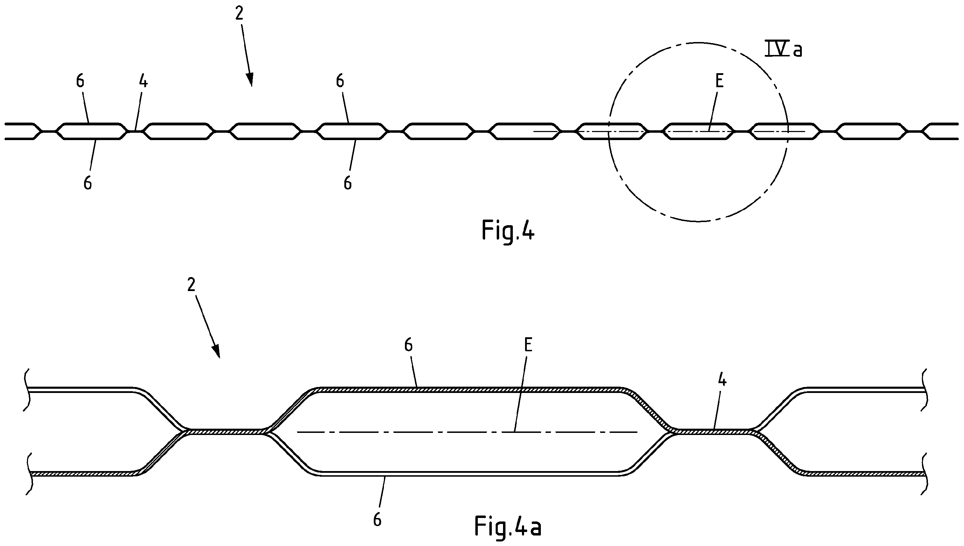

Diese Anordnung der Federelemente 6 wird auch aus den Fig. 4 und 4a, die eine Ausschnittsvergrößerung darstellt, deutlich. Fig. 4 zeigt einen Querschnitt der Metallfolie 4, wobei aus der Fig. 4a der alternierende Verlauf der Federelemente 6 deutlich wird.

Die oben beschriebene Materialauswahl der Metallfolie 4 ermöglicht eine Kombination von gleichzeitig guter Elastizität und guter Wärmeleitfähigkeit, so dass das Distanzausgleichselement 2 zwei verschiedene Funktionalitäten in einem Bauteil erfüllt.

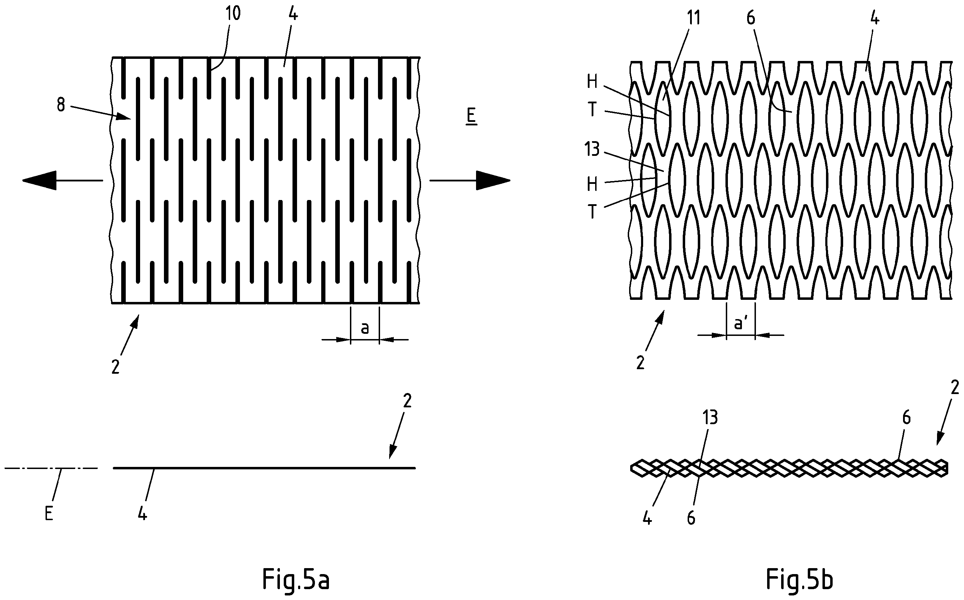

Fig. 5 zeigt ein weiteres Ausführungsbeispiel eines erfindungsgemäßen Distanzausgleichselements 2, das mittels Strecken einer Metallfolie 4 erzeugt wird. Fig. 5a zeigt die Metallfolie 4 im Ausgangszustand mit eingebrachten Schlitzen 10 einer Schlitzanordnung 8 vor dem Strecken. Die Schlitze 10 weisen einen Abstand a auf.

In Fig. 5b ist die Metallfolie 4 nach dem Strecken gezeigt, also als Streckmetall. Durch das Strecken der Metallfolie 4 in Richtung der beiden links dargestellten Pfeile werden die Schlitze auseinandergezogen, so dass diese ovale Öffnungen 11 mit dazwischen angeordneten Stegen 13 bilden. Dadurch wird einerseits eine größere Länge der gestreckten Metallfolie 4 erreicht, so dass der Abstand a' größer als der ursprüngliche Abstand a ist.. Andererseits kommt es zu beim Strecken üblichen Aufstellen der Stege 13 quer zur Ebene E (Zeichenebene im oberen Abschnitt der Fig. 5) der Metallfolie 4, wobei die Stege 13 gemäß Fig. 5 nach oben und nach unten ausgelenkt sind und nach oben und nach unten vorstehende Federelemente 6 ausbilden.

Die Stege 13 sind in Fig. 5b als schräg verlaufende Linien dargestellt. Im vergrößert dargestellten Ausschnitt ist mit den Buchstaben H und T gekennzeichnet, dass die entsprechende Kante der Stege 13 zwischen jeweils zwei ovalen Öffnungen 11 nach oben (H - hoch) oder nach unten (T - tief) vorstehen.

Die Metallfolie 4 ist also durch Strecken zum Distanzausgleichselement umgeformt worden. Die vorstehenden Federelemente 6 verlaufen schräg im Winkel zur Ebene E der Metallfolie 4, bewirken eine Höhenänderung und bilden so die elastischen Federelemente 6.

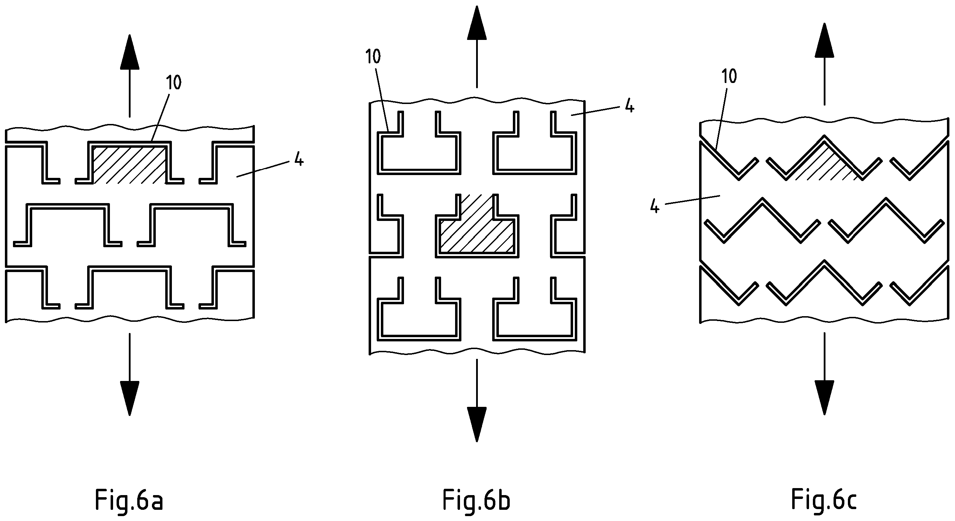

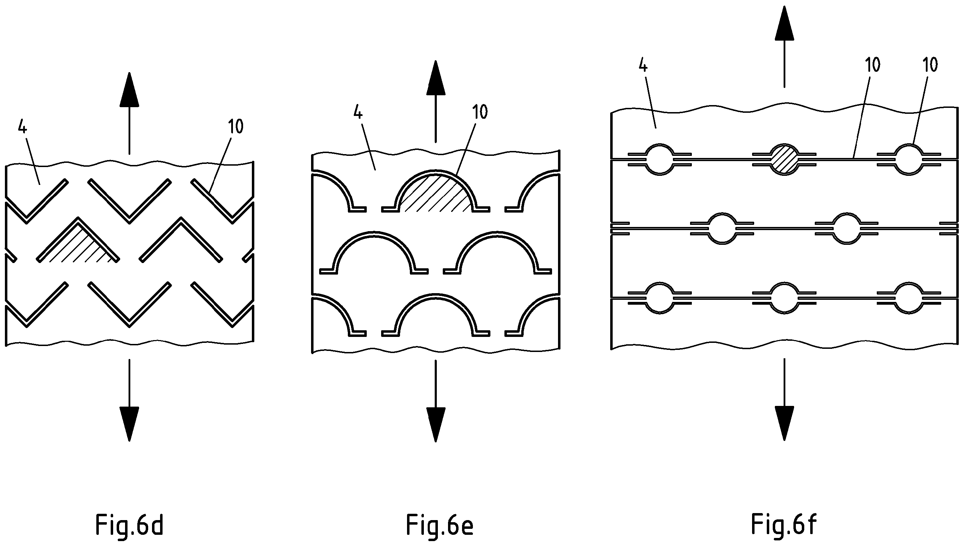

Fig. 6a bis 6f zeigen sechs weitere Ausgestaltungen von Metallfolien 4 im Ausschnitt, die Schlitzanordnungen 10 mit unterschiedlichen Geometrien aufweisen. In allen Beispielen ist die Zugrichtung senkrecht und die jeweils beispielhaft schraffierten und von Schlitzen 8 begrenzten Abschnitte der Metallfolie 4 richten sich beim Strecken der Metallfolie 4 quer zur Ebene E (Zeichenebene der Fig. 6) auf und bilden die Federelemente 6.

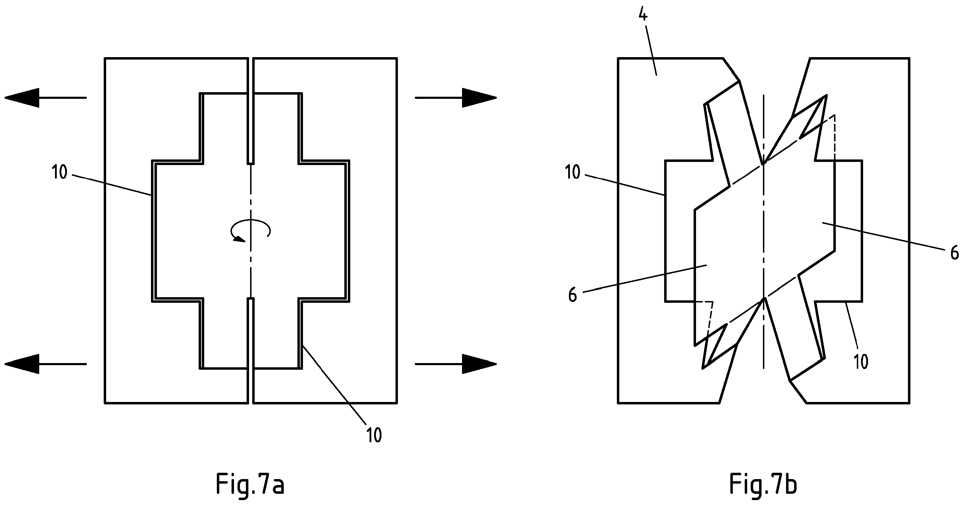

Fig. 7a und 7b zeigen ein Ausführungsbeispiel, bei der die nicht gestreckte Metallfolie 4 in Fig. 7a dargestellt ist. Fig. 7b zeigt die Metallfolie 4 nach dem Strecken. Durch das Strecken in Richtung der dargestellten Pfeile verdreht sich der mittlere Abschnitt und bildet nach beiden Seiten quer zur Ebene E (Zeichenebene der Fig. 7a, 7b) vorstehende Federelemente 6 aus.

Die zuvor anhand der Fig. 6 und 7 erläuterten Federelemente 6 stehen in einem Winkel quer zur Ebene E der Metallfolie 4 vor. Wenn die Federelemente 6 mit einem Bauteil in Berührung und zur Anlage kommen, werden die Federelemente 6 teilweise umgebogen und erzeugen somit die elastische Federkraft. Dabei kommen die Federelemente 6 zumindest teilweise flächig in Kontakt mit dem Bauteil, um die Wärmeübertragung zu realisieren.

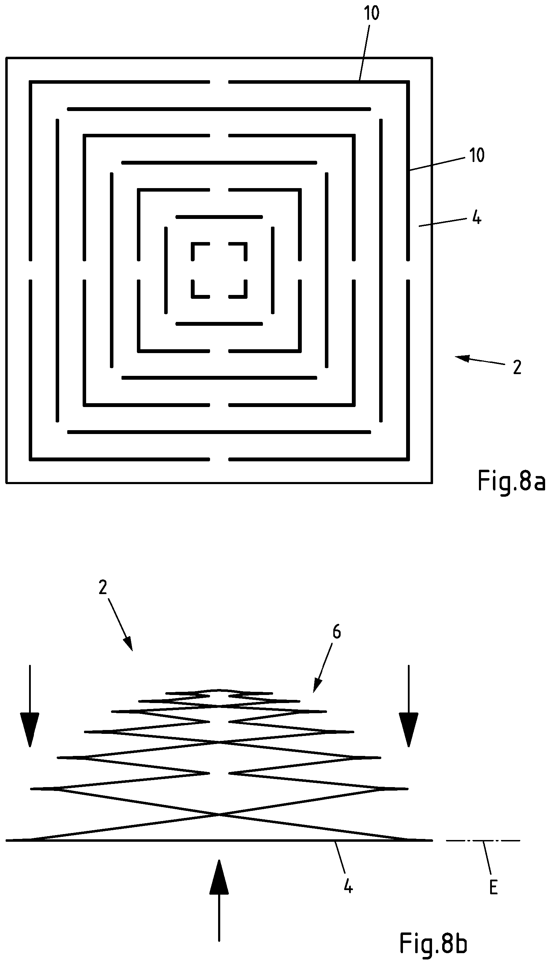

Fig. 8 zeigt eine weitere Ausbildung eines erfindungsgemäßen Distanzausgleichselements 2. Gemäß Fig. 8a weist die Metallfolie 4 im Ausgangszustand eine Schlitzanordnung 10 auf, die einen rechteckigen bzw. quadratischen Grundriss aufweist. Die ineinander angeordneten quadratischen Schlitze 10 weisen wechselseitig an den Ecken oder mittig entlang der Seitenkanten Unterbrechungen auf.

Fig. 8b zeigt das Umformen der Metallfolie 4, wobei in den äußeren Bereichen der Schlitzstruktur die Metallfolie relativ nach unten gedrückt und der mittlere Bereich relativ nach oben gedrückt wird. Dadurch entsteht eine Ziehharmonika-ähnliche Struktur, die ähnliche einer Pyramide aus der Ebene E der Metallfolie 4 vorsteht.

Bei einer weiteren Ausgestaltung kann das Distanzausgleichselement 2 eine Mehrzahl von zuvor anhand von Fig. 8 beschriebenen Federelementen 2 versehen sein.

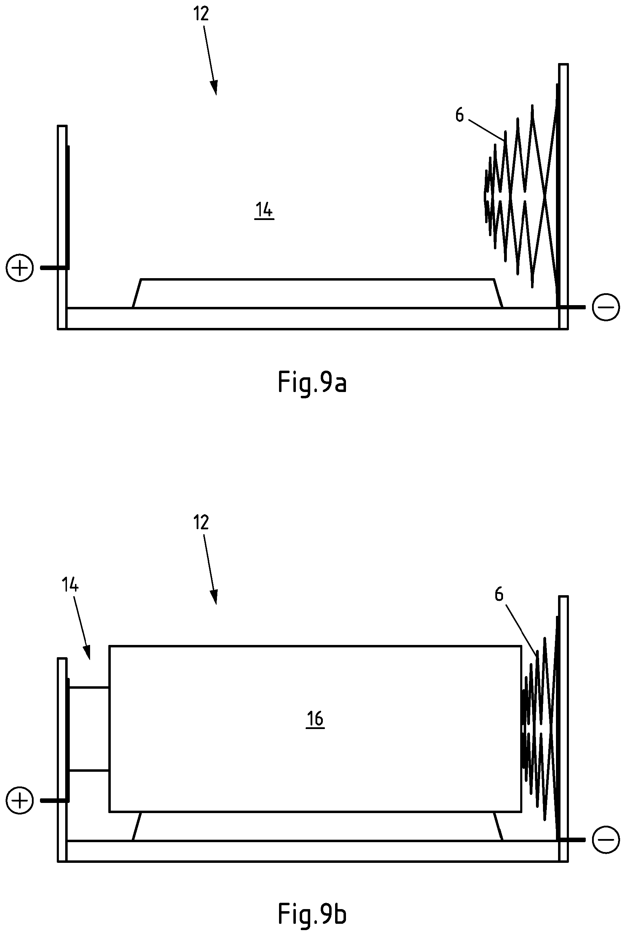

Fig. 9 zeigt ein Anwendungsbeispiel eines Distanzausgleichselements 2 nach Fig. 8 in Form einer Batteriehalterung 12 mit einer Aufnahme 14 für eine zylinderförmigen Batterie 16. Die Aufnahme 14 weist am rechten Rand das Distanzausgleichselement 2 mit dem vorstehenden Federelement 6, in Fig. 9a im entspannten Zustand. Bei eingesetzter Batterie 16 nach Fig. 9b ist das Federelement 6 teilweise zusammengedrückt und hält die Batterie 16 sicher in der Aufnahme 14. Gleichzeitig sorgt das Distanzausgleichselement 2 durch die flächige Anlage des Federelements 6 an dem Minuspol der Batterie 16 sowohl für eine Wärmeableitung als auch für eine elektrische Kontaktierung und Weiterleitung der elektrischen Energie.

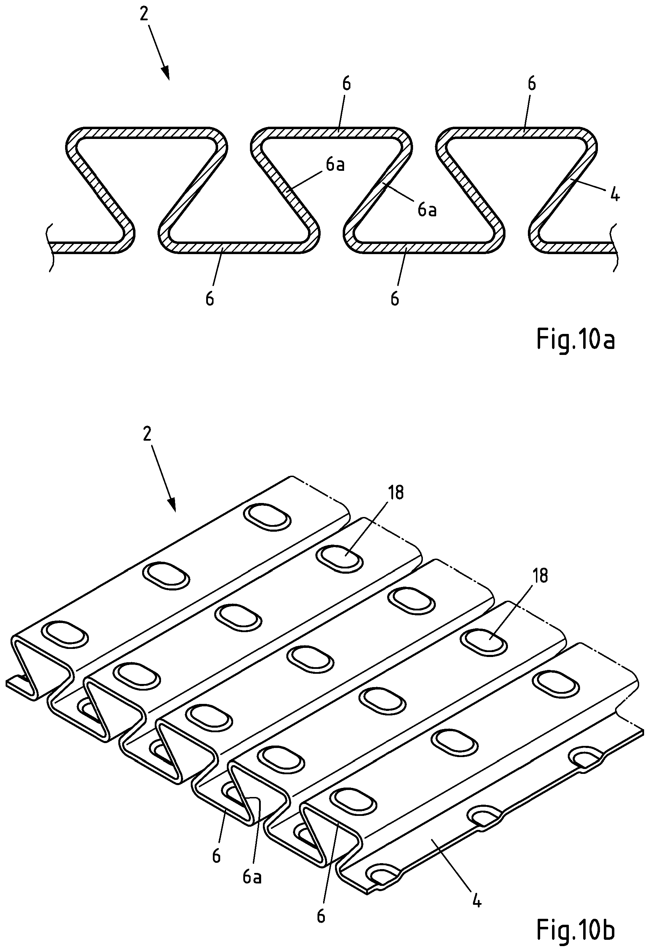

Die Fig. 10a, 10b und 11 zeigen zwei weitere Ausführungsbeispiele von Distanzausgleichselementen 2, die jeweils aus einer gerafften Metallfolie 4 bestehen.

Fig. 10a zeigt einen Querschnitt durch die Metallfolie 4 und Fig. 10b zeigt eine teilweise geschnittene dreidimensionale Darstellung. Die Metallfolie 4 weist im Unterschied zu bisherigen Ausführungsbeispielen keine Schlitzstruktur auf, sondern wird aus einer flachen Ausgangsmetallfolie durch Falten und Umbiegen entlang paralleler Linien und in regelmäßig wiederkehrenden Abständen hergestellt. Dadurch entsteht eine dreidimensionale Struktur mit nach beiden Seiten vorstehenden langgestreckten Federelementen 6. Im Querschnitt nach Fig. 10a ist zu erkennen, dass jedes Federelement 6 im Querschnitt schräg verlaufenden innere Abschnitte 6a aufweist, die bei vertikal einwirkenden Kräften nachgeben und die erforderliche Elastizität der Federelemente 6 hervorrufen.

In Fig. 10b ist weiterhin zu erkennen, dass die Federelemente 6 beabstandete vorstehende Kontaktelemente 18 aufweisen, die durch Einprägen in den flächigen Federelementen 6 vor dem Falten und Umbiegen eingebracht worden sind. Mit den Kontaktelementen 18 wird die Federkraft der Federelemente 6 auf wenige Anlageabschnitte konzentriert.

Fig. 11 zeigt ein weiteres Ausführungsbeispiel ähnlich zu dem Beispiel nach Fig. 10. Das Distanzausgleichselement 2 nach Fig. 10 weist einen geraden Verlauf der vorstehenden Flächen der Federelemente 6 und der inneren Abschnitte 6a auf. Das Distanzausgleichselement nach Fig. 11 zeigt dagegen einen leicht gebogenen Verlauf der vorstehenden Flächen der Federelemente 6.

Fig. 12 zeigt eine erfindungsgemäße Anordnung 20 bestehend aus einem ersten Bauteil in Form einer Mehrzahl von aufladbaren Batterien 22, einem Distanzausgleichselement nach Fig. 1 und einem zweiten Bauteil in Form einer Batteriewanne 24. Das Distanzausgleichselement 2 ist zwischen den beiden Bauteilen 22 und 24 angeordnet. Durch Schließen und ggf. Verrasten eines Deckels 26 werden die Batterien 22 nach unten gegen das Distanzausgleichselement 2 gedrückt und somit innerhalb des aus Batteriewanne 24 und Deckel 26 gebildeten Batteriegehäuse fixiert.

Die Federelemente 6 des Distanzausgleichselements 2 gleichen somit Abmessungsvariationen der Batterien 22 aus, da die einzelnen Federelemente 6 unabhängig voneinander verformbar sind und unterschiedliche Federkräfte aufbringen können. Zudem überträgt das Distanzausgleichselement 2 durch die Anlage an beiden Bauteilen 22 und 24 die in den Batterien während der Benutzung oder während des Aufladens Wärmeenergie von den Batterien 22 auf die Batteriewanne 24.

Die Darstellung der Anordnung in Fig. 12 ist schematisch und berücksichtigt nicht die für eine solche Batteriezellenanordnung notwendigen elektrischen Verbindungen.

## Patentansprüche

1. Distanzausgleichselement zur Anordnung zwischen zwei Bauteilen
- mit einer Metallfolie (4) und
- mit integral mit der Metallfolie (4) ausgebildeten Federelementen (6),
- wobei die Federelemente (6) von der Ebene (E) der Metallfolie (4) vorstehen und
- wobei die Federelemente (6) dazu eingerichtet sind, mit zumindest einem der Bauteile in Kontakt zu stehen, und
- wobei eine Schlitzanordnung (8) mit einer Mehrzahl von Schlitzen (10) in die Metallfolie (4) eingebracht ist,
- wobei die Metallfolie (4) durch Strecken verformt ist,
**dadurch gekennzeichnet,**
- **dass** die Metallfolie (4) aus mindestens zwei Metallschichten besteht,
- **dass** mindestens eine Metallschicht aus einem ersten Metall besteht,
- **dass** mindestens eine Metallschicht aus einem zweiten Metall besteht,
- **dass** das erste Metall ein gegenüber dem zweiten Metall größeres Elastizitätsmodul aufweist und
- **dass** das zweite Metall eine gegenüber dem ersten Metall größere Wärmeleitfähigkeit aufweist.

2. Distanzausgleichselement nach Anspruch 1,
**dadurch gekennzeichnet,**
**dass** das erste Metall aus einer Aluminiumlegierung besteht und das zweite Metall aus einem Edelstahl besteht.

3. Distanzausgleichselement nach Anspruch 1 oder 2,
**dadurch gekennzeichnet,**
**dass** die Metallfolie aus drei Schichten besteht, wobei die beiden äußeren Schichten aus dem ersten Metall und die mittlere Schicht aus dem zweiten Metall bestehen.

4. Distanzausgleichselement nach einem der Ansprüche 1 bis 3,
**dadurch gekennzeichnet,**
**dass** die Metallfolie zumindest abschnittsweise und in mindestens einer Schicht ein ferromagnetisches Metall aufweist.

5. Distanzausgleichselement nach einem der Ansprüche 1 bis 4,
**dadurch gekennzeichnet,**
**dass** auf mindestens einer Seite der Metallfolie (4) eine elektrisch isolierende Schicht angeordnet ist.

6. Verwendung einer Metallfolie als Distanzausgleichselement zur Anordnung zwischen zwei Bauteilen,
wobei die Metallfolie (4) nach einem der Ansprüche 1 bis 5 ausgebildet ist.

7. Anordnung aus einem ersten Bauteil (22), einem Distanzausgleichselement (2) und einem zweiten Bauteil (24),
- wobei das Distanzausgleichselement (2) nach einem der Ansprüche 1 bis 5 ausgebildet ist,
- wobei das Distanzausgleichselement (2) zwischen den beiden Bauteilen (22, 24) angeordnet ist,
- wobei die Federelemente (6) des Distanzausgleichselements (2) Abmessungsvariationen des ersten Bauteils (22) ausgleichen und
- wobei das Distanzausgleichselement (2) Wärmeenergie von dem ersten Bauteil (22) auf das zweite Bauteil (24) überträgt.

8. Anordnung nach Anspruch 7,
**dadurch gekennzeichnet,**
**dass** dann, wenn die Federelemente (6) nur zu einer Seite der Ebene der Metallfolie (4) vorstehen, die Federelemente (6) mit einem der Bauteile in Kontakt stehen und die Metallfolie (4) mit den nicht verformten Abschnitten mit dem anderen Bauteil in Kontakt steht.

9. Anordnung nach Anspruch 7 oder 8,
**dadurch gekennzeichnet,**
**dass** das mindestens zwei Distanzausgleichelemente (2) nach einem der Ansprüche 1 bis 12 zwischen dem ersten Bauteil (22) und dem zweiten Bauteil (24) angeordnet sind.

10. Anordnung nach einem der Ansprüche 7 bis 9,
**dadurch gekennzeichnet,**
- **dass** das erste Bauteil (22) ein elektrisches Bauteil, insbesondere eine Batterie, eine Batteriezellenanordnung oder ein Display ist und
- **dass** das zweite Bauteil (24) ein mechanisches Bauteil, insbesondere eine Batteriewanne, ein Gehäuse, ein Armaturenbrett eines Fahrzeugs oder eines Flugzeugs, eine Anzeigetafel oder ein Straßenschild ist.

11. Anordnung nach einem der Ansprüche 7 bis 10,
**dadurch gekennzeichnet,**
**dass** die Metallfolie (4) die elektrischen Kontakte von Batterien verbindet und mit einer elektrischen Leitung verbunden ist.

## Claims

1. Distance compensation element for arrangement between two components
- with a metal foil (4) and
- with spring elements (6) integral with the metal foil (4),
- wherein the spring elements (6) protrude from the plane (E) of the metal foil (4),
- wherein the spring elements (6) are designed to be in contact with at least one of the components, and.
- wherein a slit arrangement (8) with a plurality of slits (10) is introduced into the metal foil (4),
- wherein the metal foil (4) is deformed by stretching.
**characterized in,**
- **that** the metal foil (4) consists of at least two metal layers,
- **that** at least one metal layer consists of a first metal,
- **that** at least one metal layer consists of a second metal,
- in that the first metal has a greater modulus of elasticity than the second metal, and
- **that** the second metal has a greater thermal conductivity than the first metal.

2. Distance compensating element according to claim 1,
**characterized in,**
**that** the first metal is made of an aluminium alloy and the second metal is made of a stainless steel.

3. Distance compensation element according to claim 1 or 2,
**characterized in,**
**that** the metal foil consists of three layers, the two outer layers consisting of the first metal and the middle layer consisting of the second metal.

4. Distance compensating element according to one of the claims 1 to 3,
**characterized in,**
**that** the metal foil comprises a ferromagnetic metal at least in sections and in at least one layer.

5. Distance compensation element according to one of claims 1 to 4,
**characterized in,**
**that** an electrically insulating layer is arranged on at least one side of the metal foil (4).

6. Use of a metal foil as a distance compensation element for arrangement between two components,
wherein the metal foil (4) is formed according to any one of claims 1 to 5.

7. Arrangement of a first component (22), a distance compensating element (2) and a second component (24),
- wherein the distance compensating element (2) is formed according to one of claims 1 to 5,
- wherein the distance compensating element (2) is arranged between the two components (22, 24),
- wherein the spring elements (6) of the distance compensating element (2) compensate for dimensional variations of the first component (22), and
- wherein the distance compensating element (2) transfers thermal energy from the first component (22) to the second component (24).

8. Arrangement according to claim 7,
**characterized in,**
**that**, when the spring elements (6) protrude only to one side of the plane of the metal foil (4), the spring elements (6) are in contact with one of the components and the metal foil (4) with the non-deformed portions is in contact with the other component.

9. Arrangement according to claim 7 or 8,
**characterized in,**
**that** the at least two distance compensating elements (2) according to one of the claims 1 to 5 are arranged between the first component (22) and the second component (24).

10. Arrangement according to any one of claims 7 to 9,
**characterized in,**
- **that** the first component (22) is an electrical component, in particular a battery, a battery cell arrangement or a display, and
- **that** the second component (24) is a mechanical component, in particular a battery tray, a housing, a dashboard of a vehicle or an aircraft, a display panel or a road sign.

11. Arrangement according to any one of claims 7 to 10,
**characterized in,**
**that** the metal foil (4) connects the electrical contacts of batteries and is connected to an electrical line.

## Revendications

1. Élément de compensation de distance à placer entre deux composants
- avec une feuille métallique (4) et
- avec des éléments de ressort (6) formés d'un seul tenant avec la feuille métallique (4),
- les éléments de ressort (6) faisant saillie du plan (E) de la feuille métallique (4) et
- les éléments de ressort (6) étant configurés pour être en contact avec au moins l'un des composants, et
- un agencement de fentes (8) avec une pluralité de fentes (10) étant réalisé dans la feuille métallique (4),
- la feuille métallique (4) étant déformée par étirage,
**caractérisé**
- **en ce que** la feuille métallique (4) est constituée d'au moins deux couches métalliques,
- **en ce qu'**au moins une couche métallique est constituée d'un premier métal,
- **en ce qu'**au moins une couche métallique est constituée d'un deuxième métal,
- **en ce que** le premier métal présente un module d'élasticité supérieur en comparaison au deuxième métal, et
- **en ce que** le deuxième métal présente une conductivité thermique supérieure en comparaison au premier métal.

2. Élément de compensation de distance selon la revendication 1,
**caractérisé**
**en ce que** le premier métal est constitué d'un alliage d'aluminium et le deuxième métal est constitué d'un acier inoxydable.

3. Élément de compensation de distance selon la revendication 1 ou 2,
**caractérisé**
**en ce que** la feuille métallique est constituée de trois couches, les deux couches extérieures étant constituées du premier métal et la couche intermédiaire étant constituée du deuxième métal.

4. Élément de compensation de distance selon l'une des revendications 1 à 3,
**caractérisé**
**en ce que** la feuille métallique présente, au moins par sections et dans au moins une couche, un métal ferromagnétique.

5. Élément de compensation de distance selon l'une des revendications 1 à 4,
**caractérisé**
**en ce qu'**une couche électriquement isolante est disposée au niveau d'au moins un côté de la feuille métallique (4).

6. Utilisation d'une feuille métallique comme élément de compensation de distance à disposer entre deux composants,
la feuille métallique (4) étant formée selon l'une des revendications 1 à 5.

7. Agencement d'un premier composant (22), d'un élément de compensation de distance (2) et d'un deuxième composant (24),
- l'élément de compensation de distance (2) étant formé selon l'une des revendications 1 à 5,
- l'élément de compensation de distance (2) étant disposé entre les deux composants (22, 24),
- les éléments de ressort (6) de l'élément de compensation de distance (2) compensant les variations dimensionnelles du premier composant (22) et
- l'élément de compensation de distance (2) transmettant de l'énergie thermique du premier composant (22) au deuxième composant (24).

8. Agencement selon la revendication 7,
**caractérisé**
**en ce que**, lorsque les éléments de ressort (6) ne font saillie que d'un côté du plan de la feuille métallique (4), les éléments de ressort (6) sont en contact avec l'un des composants et la feuille métallique (4) est en contact avec l'autre composant par les parties non déformées.

9. Agencement selon la revendication 7 ou 8,
**caractérisé**
**en ce que** l'au moins deux éléments de compensation de distance (2) selon l'une des revendications 1 à 12 sont disposés entre le premier composant (22) et le deuxième composant (24).

10. Agencement selon l'une des revendications 7 à 9,
**caractérisé**
- **en ce que** le premier composant (22) est un composant électrique, en particulier une batterie, un agencement de cellules de batterie ou un écran, et
- **en ce que** le deuxième composant (24) est un composant mécanique, en particulier un bac de batterie, un boîtier, un tableau de bord de véhicule ou d'aéronef, un panneau d'affichage ou un panneau routier.

11. Agencement selon l'une quelconque des revendications 7 à 10,
**caractérisé**
**en ce que** la feuille métallique (4) relie les contacts électriques de batteries et est reliée à une ligne électrique.
